(19) **Europäisches Patentamt / European Patent Office / Office européen des brevets**

(11) **EP 4 410 593 A1**

(12) **EUROPEAN PATENT APPLICATION**
published in accordance with Art. 153(4) EPC

(43) Date of publication:
07.08.2024 Bulletin 2024/32

(21) Application number: 21963510.9

(22) Date of filing: 09.11.2021

(51) International Patent Classification (IPC):
B60N 2/14 (2006.01)          B60R 22/24 (2006.01)
B60R 21/00 (2006.01)

(52) Cooperative Patent Classification (CPC):
B60N 2/14; B60R 21/00; B60R 22/24

(86) International application number:
PCT/CN2021/129600

(87) International publication number:
WO 2023/082053 (19.05.2023 Gazette 2023/20)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Huawei Technologies Co., Ltd.
Shenzhen, Guangdong 518129 (CN)

(72) Inventors:
• CHEN, Qingxue
Shenzhen, Guangdong 518129 (CN)
• GU, Jiaqian
Shenzhen, Guangdong 518129 (CN)
• ZHANG, Yunji
Shenzhen, Guangdong 518129 (CN)
• WU, Yiyong
Shenzhen, Guangdong 518129 (CN)

(74) Representative: Goddar, Heinz J.
Boehmert & Boehmert
Anwaltspartnerschaft mbB
Pettenkoferstrasse 22
80336 München (DE)

(54) **SEAT, SEAT BELT DEVICE, CONTROL METHOD AND RELATED APPARATUS**

(57)    This application relates to the field of intelligent vehicle technologies, and provides a vehicle seat, including: a first track, where the first track is disposed at the bottom of a cockpit of a vehicle and has a first split and a second split, the first split extends along a front-rear direction of the vehicle, and the second split extends along a left-right direction of the vehicle and is connected to a rear end of the first split; a seat body, where the seat body is disposed on the first track; and a first driving mechanism, where the first driving mechanism is configured to drive the seat body to move along the first track. In this way, when a collision occurs on a front part of the vehicle, the first driving mechanism may drive the seat body to move backwards along the first split. When a collision occurs on a side part of the vehicle, the first driving mechanism may drive the seat body to move along the second split in a direction away from the side part on which the collision occurs. Therefore, the seat body and a passenger can be driven away from a collision location when the collision occurs on the side part of the vehicle, thereby reducing injury caused by a collision accident to the passenger and ensuring life safety of the passenger in the vehicle.

FIG. 3

**Description**

**TECHNICAL FIELD**

This application relates to the field of intelligent vehicle technologies, and in particular, to a vehicle seat, a safety belt apparatus, a control method, and a related device.

**BACKGROUND**

With improvement of people's living standards, vehicles, as a convenient means of transportation, increasingly become a primary travel choice for people. Therefore, a quantity of vehicles running on roads gradually increases, accompanied by a gradual increase in a quantity of traffic safety accidents. According to statistics of the traffic safety administration, 70% of the traffic safety accidents are vehicle collision accidents, which seriously threatens life safety of passengers in the vehicles.

To reduce vehicle collision accidents, a common practice is to set sensors such as a lidar, a millimeter wave radar, and a camera on the vehicles. By using advantages of sensors of different types, a distance and a relative speed of an obstacle such as a vehicle or a pedestrian around a vehicle body are accurately monitored in real time in a driving process, to accurately determine a collision possibility, and send a warning to a driver before a collision accident occurs, so as to remind the driver to take a corresponding measure to avoid a vehicle collision accident. In addition, the vehicle may further monitor a vehicle and a pedestrian ahead in real time in the driving process. When an emergency danger occurs or a distance between the vehicle and the vehicle or the pedestrian ahead is less than a safe distance, the vehicle actively brakes under control of a mobile data center (Mobile Data Center, MDC), to avoid or reduce a collision accident such as rear-ending, thereby improving driving safety of the vehicle.

An objective of the foregoing method is to reduce the collision accident. However, in some environments, after the driver receives a warning and takes a corresponding measure, or after the vehicle actively brakes, the collision accident may still occur on the vehicle due to an excessively small safety distance or another reason, and consequently life safety of a passenger in the vehicle still cannot be ensured.

**SUMMARY**

This application provides a vehicle seat, a safety belt apparatus, a control method, and a related device, to further ensure safety of a passenger.

A first aspect of this application provides a vehicle seat, including: a first track, where the first track is disposed at the bottom of a cockpit of a vehicle and has a first split and a second split, the first split extends along a front-rear direction of the vehicle, and the second split extends along a left-right direction of the vehicle and is connected to a rear end of the first split; a seat body, where the seat body is disposed on the first track; and a first driving mechanism, where the first driving mechanism is configured to drive the seat body to move along the first track.

In this way, when a collision occurs on a front part of the vehicle, the first driving mechanism may drive the seat body to move backwards along the first split. When a collision occurs on a side part of the vehicle, the first driving mechanism may drive the seat body to move along the second split in a direction away from the side part on which the collision occurs. Therefore, when the collision occurs on either of the front part or the side part of the vehicle, the seat body and a passenger can be driven away from a collision location, thereby reducing injury caused by a collision accident to the passenger and ensuring life safety of the passenger in the vehicle.

In a possible implementation of the first aspect, the left end and right end of the second split are separately connected to the first split.

Because the left end and right end of the second split are separately connected to the first split, and are connected to the rear end of the first split, after moving from the first split at one end of the second split to the first split at the other end of the second split, a front-facing seat body changes to rear-facing. In this way, a backrest part of the seat body may be made front-facing, so that the seat body is used to provide protection for the passenger when the collision occurs on the front part of the vehicle, thereby preventing a foreign object that enters the cockpit due to a front-part collision from causing injury to the passenger.

In a possible implementation of the first aspect, there are two seat bodies. In this way, protection can be provided for passengers on the two seat bodies when the collision accident occurs on the vehicle.

A second aspect of this application provides a safety belt apparatus, including: a safety belt; a second track, where the second track is disposed at the top of a cockpit of a vehicle and has a third split and a fourth split, the third split extends along a front-rear direction of the vehicle, and the fourth split extends along a left-right direction of the vehicle and is connected to a rear end of the third split; and a second driving mechanism, where the second driving mechanism is configured to drive one end of the safety belt to move along the second track.

In this way, when a seat body moves along a first track, the second driving mechanism may drive one end of the safety belt to move along the second track, so that the safety belt may bind a passenger to the seat body, thereby avoiding a danger that the passenger falls from the seat body due to inertia when the seat body moves.

In a possible implementation of the second aspect, the left end and the right end of the fourth split are separately connected to the third split.

In this way, when the seat body moves from a first split at one end of the second split to a first split at the other end of the second split, the second driving mechanism may correspondingly drive one end of the safety belt to move along with the seat body, to provide protection for the passenger.

In a possible implementation of the second aspect, a retractor is further included. The retractor is disposed on the seat body through fastening, and the other end of the safety belt is connected to the retractor.

In this way, the other end of the safety belt can move with the seat body when the seat body moves, thereby improving a protection effect of the safety belt on the passenger.

In a possible implementation of the second aspect, the third split is disposed on an upper longitudinal beam of the vehicle, and the fourth split is disposed on a rear cross beam of the vehicle. In this way, the second track can be made firmer and more stable, thereby ensuring reliability of the safety belt when providing protection for the passenger.

A third aspect of this application provides a control method, including: obtaining collision information, where the collision information includes a predicted collision probability that a collision occurs on a vehicle, or indication information indicating whether a collision occurs on a vehicle; and when the collision probability is greater than or equal to a first threshold, or the indication information indicates that the collision occurs on the vehicle, sending a first control instruction, where the first control instruction is used to control a seat body of the vehicle to move along a first split and a second split of a first track, the first split extends along a front-rear direction of the vehicle, and the second split extends along a left-right direction of the vehicle and is connected to a rear end of the first split.

In this way, when it is predicted that the collision probability is greater than or equal to the first threshold, or the indication information indicates that the collision occurs on the vehicle, the seat body may be controlled to move along the first split and the second split of the first track. Therefore, when the collision is about to occur or is occurring on a side part of the vehicle, the seat body may be controlled to be away from a collision location, thereby reducing injury caused by a collision accident to a passenger and ensuring life safety of the passenger in the vehicle.

In a possible implementation of the third aspect, that the indication information indicates that the collision occurs on the vehicle specifically means that the indication information indicates that collision intensity of the collision occurring on the vehicle is greater than a first intensity threshold.

In this way, when it is detected that the collision intensity of the collision occurring on the vehicle is greater than the first intensity threshold and that the collision intensity may cause injury to the passenger, the seat body may further be controlled to move along the first split and the second split of the first track, to control the seat body to be away from the collision location, thereby reducing injury caused by the collision accident to the passenger and ensuring life safety of the passenger in the vehicle.

In a possible implementation of the third aspect, the collision information further includes a predicted collision location at which the collision occurs on the vehicle. When the collision location is the side part of the vehicle, the first control instruction is specifically used to control a seat body on a corresponding side of the collision to move along the first track to an opposite side of the collision.

In this way, when it is predicted that the collision location is the side part of the vehicle, a moving direction of the seat body may be controlled based on the predicted collision location. Therefore, when the collision occurs, the seat body may be controlled to be away from the collision location, to reduce injury caused by the collision accident to the passenger.

In a possible implementation of the third aspect, there are two seat bodies, and the method further includes: obtaining passenger seating information of the seat bodies. The first control instruction is specifically used to control a seat body taken by a passenger in the seating information to move along the first track.

In this way, whether there is a passenger on the seat body may be determined based on the seating information, so that the seat body taken by the passenger may be controlled to move, so as to reduce injury caused by the collision accident to the passenger, and improve efficiency of passenger protection during the collision.

In a possible implementation of the third aspect, when the collision location is a front part of the vehicle, and one of the two seat bodies in the seating information is taken by the passenger, the first control instruction is specifically used to control a seat body taken by the passenger to move along the first track.

In this way, when the collision accident occurs on the front part of the vehicle, the seat body taken by the passenger may be controlled to move to a rear side of the seat body not taken by the passenger, so that the seat body not taken by the passenger may be used to protect the passenger, thereby preventing a foreign object of the front part that collides into the cockpit due to the collision from causing injury to the passenger.

In a possible implementation of the third aspect, the collision information further includes a location relationship between the vehicle and a vehicle ahead that is predicted after the vehicle collides with the vehicle ahead. When the location relationship indicates that the vehicle is located at the bottom of the vehicle ahead, the first control instruction is further used to control the seat body to reduce a height.

In this way, when it is predicted that the vehicle is located at the bottom of the vehicle ahead after the collision, the seat body may be controlled to reduce the height to reduce a height of the passenger, thereby preventing a rear end of the vehicle ahead from colliding into the cockpit of the vehicle and causing injury to the passenger.

In a possible implementation of the third aspect, the method further includes: when the collision probability is greater than or equal to the first threshold, or the indication information indicates that the collision occurs on the vehicle, sending a second control instruction, where the second control instruction is used to control one end of a safety belt to move along a third split and a fourth split of a second track, the third split extends along the front-rear direction of the vehicle, and the fourth split extends along the left-right direction of the vehicle and is connected to a rear end of the third split.

In this way, when the seat body moves on the first track, one end of the safety belt is controlled to move along the second track, so that the safety belt may bind the passenger to the seat body during movement of the seat body, thereby preventing the passenger from falling from the seat body due to inertia when the seat body moves.

In a possible implementation of the third aspect, the method further includes: when the collision probability is greater than a second threshold, sending a third control instruction, where the third control instruction is used to control the vehicle to brake.

In this way, a speed of the vehicle may be reduced by controlling the vehicle to brake, thereby avoiding the collision accident or reducing a severity of the collision accident, to reduce injury caused by the collision accident to the passenger.

A fourth aspect of this application provides a controller: The controller obtains collision information, where the collision information includes a predicted collision probability that a collision occurs on a vehicle, or indication information indicating whether a collision occurs on a vehicle. When the collision probability is greater than or equal to a first threshold, or the indication information indicates that the collision occurs on the vehicle, the controller sends a first control instruction, where the first control instruction is used to control a seat body of the vehicle to move along a first split and a second split of a first track, the first split extends along a front-rear direction of the vehicle, and the second split extends along a left-right direction of the vehicle and is connected to a rear end of the first split.

In this way, when it is predicted that the collision probability is greater than or equal to the first threshold, or the indication information indicates that the collision occurs on the vehicle, the seat body may be controlled to move along the first split and the second split of the first track. Therefore, when the collision is about to occur or is occurring on a side part of the vehicle, the seat body may be controlled to be away from a collision location, thereby reducing injury caused by a collision accident to a passenger and ensuring life safety of the passenger in the vehicle.

In a possible implementation of the fourth aspect, that the indication information indicates that the collision occurs on the vehicle specifically means that the indication information indicates that collision intensity of the collision occurring on the vehicle is greater than a first intensity threshold.

In this way, when it is detected that the collision intensity of the collision occurring on the vehicle is greater than the first intensity threshold and that the collision intensity may cause injury to the passenger, the seat body may further be controlled to move along the first split and the second split of the first track, to control the seat body to be away from the collision location, thereby reducing injury caused by the collision accident to the passenger and ensuring life safety of the passenger in the vehicle.

In a possible implementation of the fourth aspect, the collision information further includes a predicted collision location at which the collision occurs on the vehicle. When the collision location is the side part of the vehicle, the first control instruction is specifically used to control the seat body on a corresponding side of the side part to move along the first track to an opposite side of the side part.

In this way, a moving direction of the seat body may be controlled based on the predicted collision location. Therefore, when the collision occurs, the seat body may be controlled to be away from the collision location, to reduce injury caused by the collision accident to the passenger.

In a possible implementation of the fourth aspect, there are two seat bodies, and the controller further performs the following operation: obtaining passenger seating information of the seat bodies. The first control instruction is specifically used to control a seat body taken by a passenger in the seating information to move along the first track.

In this way, whether there is a passenger on the seat body may be determined based on the seating information, so that the seat body taken by the passenger may be controlled to move, to reduce injury caused by the collision accident to the passenger, and improve efficiency of passenger protection during the collision.

In a possible implementation of the fourth aspect, when the collision location is a front part of the vehicle, and one of the two seat bodies in the seating information is taken by the passenger, the first control instruction is specifically used to control a seat body taken by the passenger to move along the first track.

In this way, when the collision accident occurs on the front part of the vehicle, the seat body taken by the passenger may be controlled to move to a rear side of the seat body not taken by the passenger, so that the seat body not taken by the passenger may be used to protect the passenger, thereby preventing a foreign object of the front part that collides into the cockpit due to the collision from causing injury to the passenger.

In a possible implementation of the fourth aspect, the collision information further includes a location relationship between the vehicle and a vehicle ahead that is predicted after the vehicle collides with the vehicle ahead. When the location relationship indicates that the vehicle is located at the bottom of the vehicle ahead, the first control instruction is further used to control the seat body to reduce a height.

In this way, when it is predicted that the vehicle is located at the bottom of the vehicle ahead after the collision, the seat body may be controlled to reduce the height to reduce a height of the passenger, thereby preventing a rear end of the vehicle ahead from colliding into the cockpit of the vehicle and causing injury to the passenger.

In a possible implementation of the fourth aspect, the controller further performs the following operation: When the collision probability is greater than or equal to the first threshold, or the indication information indicates that the collision occurs on the vehicle, the controller sends a second control instruction, where the second control instruction is used to control one end of a safety belt to move along a third split and a fourth split of a second track, the third split extends along the front-rear direction of the vehicle, and the fourth split extends along the left-right direction of the vehicle and is connected to a rear end of the third split.

In this way, when the seat body moves on the first track, one end of the safety belt is controlled to move along the second track, so that the safety belt may bind the passenger to the seat body during movement of the seat body, thereby preventing the passenger from falling from the seat body due to inertia when the seat body moves.

In a possible implementation of the fourth aspect, the controller further includes: When the collision probability is greater than a second threshold, the controller sends a third control instruction, where the third control instruction is used to control the vehicle to brake.

In this way, a speed of the vehicle may be reduced by controlling the vehicle to brake, thereby avoiding the collision accident or reducing a severity of the collision accident, to reduce injury caused by the collision accident to the passenger.

A fifth aspect of this application provides a vehicle, including any possible implementation of the vehicle seat in the first aspect.

In this way, when a collision occurs on a front part of the vehicle, a first driving mechanism may drive a seat body to move backwards along a first split. When a collision occurs on a side part of the vehicle, the first driving mechanism may drive the seat body to move along a second split in a direction away from the side part on which the collision occurs. Therefore, when the collision occurs on either of the front part or the side part of the vehicle, the seat body and a passenger can be driven away from a collision location, thereby reducing injury caused by a collision accident to the passenger and ensuring life safety of the passenger in the vehicle.

In a possible implementation of the fifth aspect, any possible implementation of the safety belt apparatus in the second aspect is further included.

In this way, when a seat body moves along a first track, the second driving mechanism may drive one end of the safety belt to move along the second track, so that the safety belt may bind a passenger to the seat body, thereby avoiding a danger that the passenger falls from the seat body due to inertia when the seat body moves.

A sixth aspect of this application provides a computing device, including a processor and a memory. The memory stores program instructions, and when the program instructions are executed by the processor, the processor is enabled to perform any possible implementation of the control method in the third aspect.

A seventh aspect of this application provides a computer-readable storage medium, storing program instructions. When the program instructions are executed by a computer, the computer is enabled to perform any possible implementation of the control method in the third aspect.

An eighth aspect of this application provides a computer program product including program instructions. When the program instructions are executed by a computer, the computer is enabled to perform any possible implementation of the control method in the third aspect.

These aspects and other aspects of this application are more concise and more comprehensive in descriptions of the following (a plurality of) embodiments.

**BRIEF DESCRIPTION OF DRAWINGS**

The following further describes features of this application and a relationship between the features with reference to the accompanying drawings. The accompanying drawings are all examples, and some features are not shown in actual proportions. In addition, in some accompanying drawings, common features that are not mandatory for this application in the field of this application may be omitted. Alternatively, additional features that are not mandatory for this application are shown. A combination of the features shown in the accompanying drawings is not intended to limit this application. In addition, in this specification, content referred to by same reference signs is also the same. The specific accompanying drawings are described as follows:

FIG. 1 is a schematic diagram of a relationship between parts of a vehicle according to an embodiment of this application;
FIG. 2 is a schematic diagram of distribution of a sensor in FIG. 1;
FIG. 3 is a schematic diagram of a structure of a seat according to an embodiment of this application;
FIG. 4 is a schematic diagram of a moving manner of a seat body in FIG. 3;
FIG. 5 is a schematic diagram of another moving manner of a seat body in FIG. 3;
FIG. 6 is a schematic diagram of a partial structure of a safety belt apparatus according to an embodiment of this application;
FIG. 7 is a schematic diagram of another partial structure of a safety belt apparatus according to an embodiment of this application;
FIG. 8 is a schematic diagram of a location relationship between a first track and a second track according to an embodiment of this application;
FIG. 9 is a schematic flowchart of a control method according to an embodiment of this application;
FIG. 10 is a schematic diagram of a controller according to an embodiment of this application;
FIG. 11 is a diagram of a scenario in which a collision occurs on a front part of a vehicle according to an embodiment of this application;
FIG. 12 is a diagram of a scenario in which a collision occurs on a side part of a vehicle according to an embodiment of this application;
FIG. 13 is a diagram of another scenario in which a collision occurs on a side part of a vehicle according to an embodiment of this application;
FIG. 14a is a partial flowchart of a passenger protection method performed by a vehicle according to an embodiment of this application;
FIG. 14b is another partial flowchart of a passenger protection method performed by a vehicle according to an embodiment of this application; and
FIG. 15 is a schematic diagram of a structure of a computing device according to an embodiment of this application.

## DESCRIPTIONS OF REFERENCE NUMERALS

10: vehicle; 110: MDC; 120: ACC system; 130: seat control system; 140: safety belt control system; 150: airbag control system; 160: sensors; 161: lidar; 162: millimeter wave radar; 163: camera; 164: pressure sensor; 165: collision sensor; 170: seat; 171: first track; 171a: first split; 171b: second split; 172: seat body; 173: first driving mechanism; 180: safety belt apparatus; 181: second track; 181a: third split; 181b: fourth split; 182: safety belt; 183: second driving mechanism; 184: retractor; 185: buckle; 186: lock tongue; 190: controller; 20: another vehicle; 1500: computing device; 1510: processor; 1520: memory; 1530: communication interface.

## DESCRIPTION OF EMBODIMENTS

In this specification and the claims, the terms "first, second, third, and the like" are merely used to distinguish between similar objects, and do not represent a specific order of the objects. It may be understood that specific orders or sequences may be exchanged if permitted, so that embodiments of this application described herein can be implemented in an order other than an order illustrated or described herein.
In the following descriptions, involved reference numerals such as S110 and S 120 that indicate steps do not necessarily indicate that the steps are to be performed based on the order, and consecutive steps may be transposed if permitted, or may be performed simultaneously.
The term "include" used in this specification and the claims should not be construed as being limited to the content listed below, and does not exclude other steps. It should be construed as specifying existence of a mentioned feature, whole, step, or part, but does not exclude existence or addition of one or more other features, wholes, steps, or parts and their groups. Therefore, the expression "a device including an apparatus A and an apparatus B" should not be limited to a device including merely the components A and B.
"One embodiment" or "an embodiment" mentioned in this specification indicates that a particular feature, structure or property that is described with reference to the embodiment is included in at least one embodiment of this application. Therefore, the terms "in one embodiment" or "in an embodiment" that appear in this specification do not necessarily indicate a same embodiment, but may indicate a same embodiment. Further, in one or more embodiments, the particular features, structures, or properties can be combined in any proper manner, as will be clear from this disclosure to a person of ordinary skill in the art.
To protect a passenger in a vehicle when a collision occurs on the vehicle, one manner is to set a seat moving system, and at the same time set a primary collision sensor on a front bumper and a front cross beam of the vehicle, and a secondary collision sensor in an engine compartment. When the vehicle collides slightly and triggers merely the primary collision sensor, the seat moving system controls a seat to move backwards for a preset distance, and allows a driver to operate the steering wheel throughout a collision process. When the secondary collision sensor is triggered, the seat moving system controls a seat to flip backwards, so that a body posture of the passenger on the seat is adjusted to supination, thereby protecting the passenger and reducing injury caused by the collision to the passenger.
Another manner is to evenly fasten a plurality of collision sensors to both a front part and a rear part of the vehicle, and fasten two sets of seat ejection apparatuses in opposite ejection directions under all seats. When a collision sensor on the front part of the vehicle detects that a collision accident occurs on the front part of the vehicle, the seat ejection apparatuses drive a seat to move towards the rear part of the vehicle. When a collision sensor on the rear part of the vehicle detects that a collision accident occurs on the rear part of the vehicle, the seat ejection apparatuses drive a seat to move towards the front of the vehicle. In this way, the passenger may be moved to a side away from a collision side when the collision accident occurs on a front side or a rear side of the vehicle, thereby protecting the passenger and reducing injury caused by the collision to the passenger.
However, these manners do not consider a case of a lateral collision that may occur on the vehicle, and can merely deal with a case of a front collision or a rear collision. When a collision accident occurs on a side part of the vehicle, neither of the foregoing two manners can provide effective protection for a passenger.

Embodiments of this application provide a passenger protection solution, including a vehicle seat, a safety belt apparatus, a control method, and a related device, to further protect a passenger.

First, a related structure of a vehicle 10 to which the passenger protection solution is applied is described.

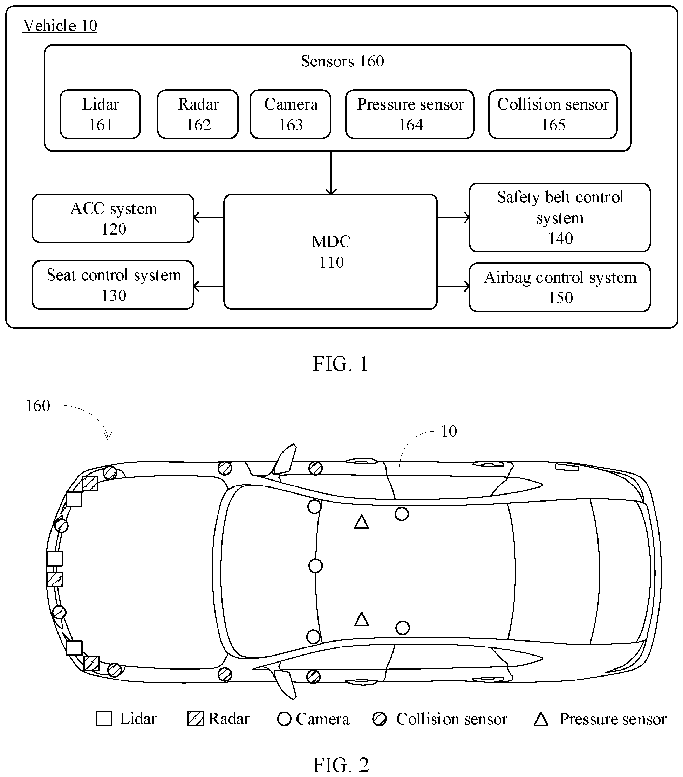

FIG. 1 is a schematic diagram of a relationship between parts of the vehicle 10 according to an embodiment of this application. As shown in FIG. 1, in this embodiment of this application, in addition to common components such as an engine or a motor, a wheel, a steering wheel, and a speed converter, the vehicle 10 may further include a mobile data center (Mobile Data Center, MDC) 110, an adaptive cruise control (Adaptive Cruise Control, ACC) system 120, a seat control system 130, a safety belt control system 140, an airbag control system 150, and sensors 160 of different types, such as a light detection and ranging (Light Detection And Ranging, lidar) 161, a radio detection and ranging (Radio Detection And Ranging, radar) 162, a camera (camera) 163, a pressure sensor 164, and a collision sensor 165. The MDC 110 is an intelligent driving computing platform deployed on the vehicle 10, and is configured to provide computing power support for intelligent driving. The ACC system 120 is an intelligent automatic control system. By coordinating actions with an anti-lock braking system and an engine control system, the ACC system 120 enables a wheel to properly brake, and reduces output power of an engine, so that the vehicle 10 keeps a safe distance from a vehicle 10 ahead. The seat control system 130 is configured to control a seat 170, the safety belt 182 control system 140 is configured to control a safety belt apparatus 180, and the airbag control system 150 is configured to control an airbag.

FIG. 2 is a schematic diagram of distribution of the sensors 160 in FIG. 1. As shown in FIG. 2, a distribution form of the sensors 160 may be as follows. A lidar 161 is disposed at each of a middle position on a front side of the vehicle 10 and positions on the front side of the vehicle 10 that are close to each of the left end and the right end. The lidar 161 may detect a distance between the vehicle 10 and a static obstacle ahead the vehicle 10 or in a direction of a left side or a right side of the vehicle 10.

A millimeter wave radar 162 is disposed at each of a middle position on the front side of the vehicle 10 and positions on the front side of the vehicle 10 that are close to each of the left end and the right end. The millimeter wave radar 162 may detect a distance between the vehicle 10 and an obstacle ahead the vehicle 10 or in the direction of the left side or the right side of the vehicle 10, and a speed of the obstacle relative to the vehicle 10.

Three front-facing cameras 163 are disposed at positions at the top of a front windshield of the vehicle 10. The three cameras 163 are separately disposed in the middle and at the left end and the right end. The three cameras 163 may be separately disposed as a long-distance camera, a medium-distance camera, and a short-distance camera, and are configured to detect environments at different distances ahead the vehicle 10.

A camera 163 is disposed at each of a middle position of each of the left side and the right side of the top of a carriage of the vehicle 10, and is configured to detect environments of the left side and the right side of the vehicle 10.

A plurality of collision sensors 165 are disposed on a front bumper, the left and right fenders, and the left and right front doors of the vehicle 10, and are configured to detect whether the vehicle 10 is collided and collision intensity generated when the vehicle 10 is collided.

Pressure sensors 164 are disposed on the seats 170 at corresponding positions of a driver's seat and a front passenger seat in a front row of the vehicle 10, and are configured to detect whether the seat 170 is taken by a passenger. As another solution for detecting whether the seat 170 is taken by a passenger, for example, detection may be performed by using data collected by an in-vehicle camera.

It should be noted that the distribution form of the sensors 160 shown in FIG. 2 is merely used as an example for description, and is not intended to limit this embodiment of this application. The sensor 160 may be further disposed in another distribution form, for example, different quantities of millimeter wave radars 162, cameras 163, and/or ultrasonic radars are disposed at appropriate positions on the left side and the right side and the rear side of the vehicle 10, to improve a capability of detecting an environment around the vehicle 10.

As shown in FIG. 1, the vehicle 10 may monitor objects in five directions (front, rear, left, right, and top) around the vehicle 10 in real time by using the lidar 161, the millimeter wave radar 162, and the camera 163, and send monitoring information to the MDC 110. The MDC 110 may predict a collision probability and a collision location based on the monitoring information of the sensors 160 such as the lidar 161, the millimeter wave radar 162, and the camera 163. A specific prediction manner is specifically described in subsequent descriptions. Details are not described herein again.

The MDC 110 may send a control instruction to the ACC system 120, the seat control system 130, the safety belt control system 140, and the airbag control system 150 based on a predicted collision probability and collision location, to control the vehicle 10, the seat 170, the safety belt apparatus 180, and the airbag to protect a passenger in the cockpit.

The following describes in detail a specific structure of the seat 170 in this embodiment of this application with reference to the accompanying drawings.

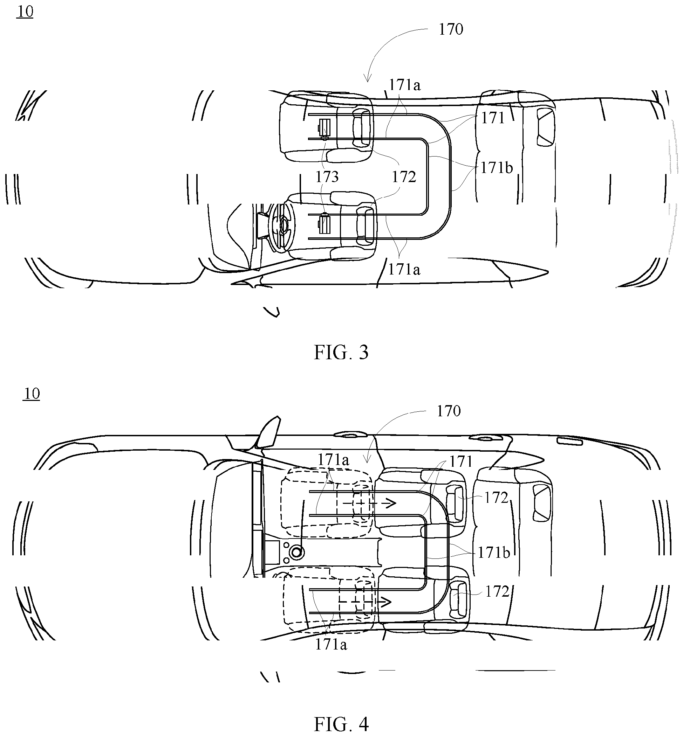

FIG. 3 is a schematic diagram of the structure of the seat 170 according to this embodiment of this application. As shown in FIG. 3, the seat 170 in this embodiment of this application includes a first track 171, a seat body 172, and a first driving mechanism 173. The first track 171 is disposed at a bottom position (specifically, on a floor) of the cockpit of the vehicle 10, and has a first split 171a extending along a front-rear direction of the vehicle 10 and a second split 171b extending along a left-right direction of the vehicle 10. The second split 171b is connected to the first split 171a at a rear end of the first split 171a. The seat body 172 is disposed on the first track 171, and the first driving mechanism 173 is configured to drive the seat body 172 to move along the first track 171.

In this way, when a collision occurs on a front part of the vehicle 10, the first driving mechanism 173 may drive the seat body 172 to move backwards along the first split 171a. When a collision occurs on a side part of the vehicle 10, the first driving mechanism 173 may drive the seat body 172 to move in a left-right direction along the second split 171b, to be away from a collision location. In this way, injury caused by a collision accident to the passenger can be reduced, and life safety of the passenger in the vehicle 10 can be ensured.

As shown in FIG. 3, the left end and the right end of the second split 171b are separately connected to one first split 171a, and the two first splits 171a and one second split 171b make the first track 171 disposed in a U-shape. Front ends of the two first splits 171a respectively extend to the corresponding positions of the driver's seat and the front passenger seat of the vehicle 10, and the second split 171b is disposed between the seat body 172 in a front row (the driver's seat and the front passenger seat) and a seat in a rear row. There may be two seat bodies 172, which are respectively disposed at positions of the driver's seat and the front passenger seat. The seat body 172 is connected to the first track 171 in a sliding manner, and may move along the first track 171.

FIG. 4 is a schematic diagram of a moving manner of the seat body 172 in FIG. 3. As shown in FIG. 4, the two seat bodies 172 may move backwards along the first track 171, so that when the collision occurs on the front part of the vehicle 10, a passenger on the seat body 172 is away from the collision location, thereby reducing injury caused by the collision to the passenger.

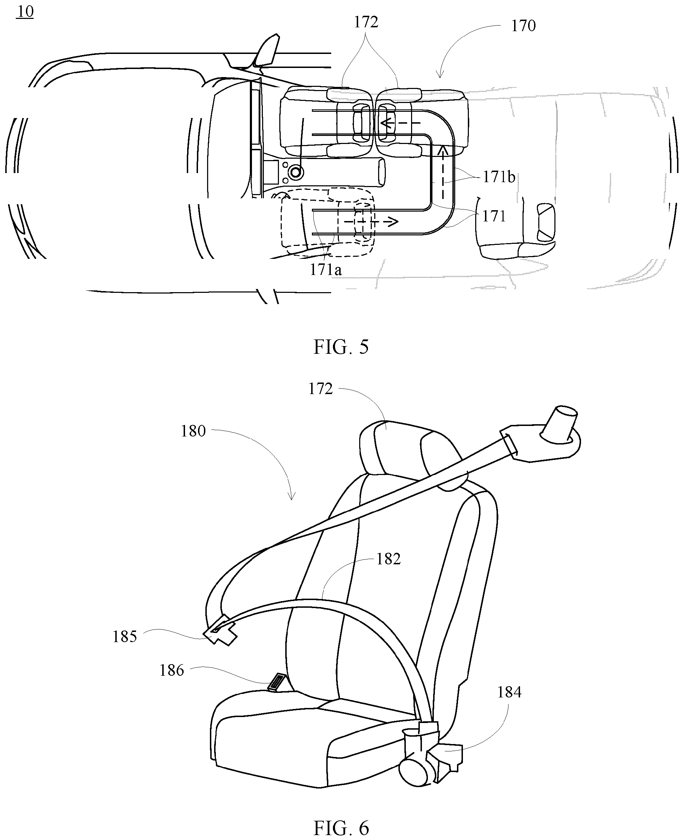

FIG. 5 is a schematic diagram of another moving manner of the seat body 172 in FIG. 3. As shown in FIG. 5, in the two seat bodies 172, the seat body 172 on one side may move along the first track 171 to a rear side of the seat body 172 on the other side. In addition, because the first track 171 is in the U-shape, an orientation of the seat body 172 changes from front-facing before the movement to rear-facing after the movement. In this way, when a side surface of the vehicle 10 is collided, the seat body 172 on the side may be moved to the other side, so that the passenger on the seat body 172 is away from the collision location, thereby reducing injury caused by the collision to the passenger. Alternatively, when a collision occurs on the front side of the vehicle 10, and only one of the two seat bodies 172 is taken by a passenger, the passenger on the seat body 172 is kept away from the collision location, with the passenger's back to the collision location, thereby further reducing injury caused by the collision to the passenger.

In some embodiments, a third track (not shown in the figure) extending along a front-rear direction may be further disposed on an upper part of the first split 171a, and forms a doublelayer track structure with the first track 171. The seat body 172 is disposed on the third track, and the passenger may adjust a position of the seat body 172 on the third track, to adjust a size of space ahead the seat body 172 after the passenger takes the seat. At a bottom position of the seat body 172, a lifting mechanism for driving the seat body 172 to rise or fall may be further disposed, so that the passenger may adjust a height of the seat body 172 as needed.

In some embodiments, the first driving mechanism 173 may include a rack disposed along the first track 171, a motor disposed on the seat body 172, and a gear disposed on a rotating shaft of the motor. The gear is engaged with the rack, and the motor may drive the seat body 172 through rotating, to move along the first track 171.

In some embodiments, the first driving mechanism 173 may include a chain disposed along the first track 171 and a chain wheel engaged with the chain. The chain is connected to the seat body 172 through fastening, and the motor drives the chain wheel to rotate, to drive the chain and the seat body 172 to move along the first track 171. The first driving mechanism 173 may be further formed by another apparatus that can drive the seat body 172 to move along the first track 171. This is not limited herein.

The following describes in detail a specific structure of the safety belt apparatus 180 in this embodiment of this application with reference to the accompanying drawings.

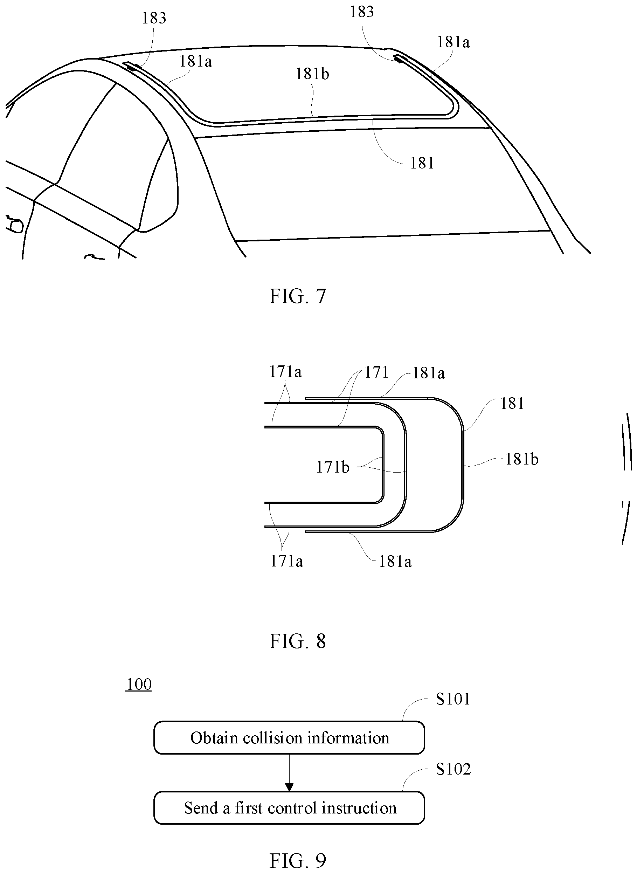

FIG. 6 is a schematic diagram of a partial structure of the safety belt apparatus 180 according to this embodiment of this application, and FIG. 7 is a schematic diagram of another partial structure of the safety belt apparatus 180 according to this embodiment of this application. As shown in FIG. 6 and FIG. 7, the safety belt apparatus 180 in this embodiment of this application may include a safety belt 182, a second track 181, and a second driving mechanism 183.

The second track 181 is disposed at the top of the cockpit of the vehicle 10, and has a third split 181a and a fourth split 181b. The third split 181a extends along the front-rear direction of the vehicle 10, and the fourth split 181b extends along the left-right direction of the vehicle 10 and is connected to a rear end of the third split 181a. The second driving mechanism 183 is configured to drive one end of the safety belt 182 to move along the second track 181. In this way, when the seat body 172 moves along the first track 171, the second driving mechanism 183 may drive one end of the safety belt 182 to move along the second track 181, so that the safety belt 182 may bind the passenger to the seat body 172, thereby avoiding a danger that the passenger falls from the seat body 172 due to inertia when the seat body 172 moves.

The left end and the right end of the fourth split 181b are separately connected to one third split 181a, and two third splits 181a and one fourth split 181b make the second track 181 disposed in a U-shape. The two third splits 181a of the second track 181 may be respectively disposed on upper longitudinal beams on the left side and the right side of the top of the cockpit, and the fourth split 181b may be disposed on a rear cross beam at the top of the cockpit, so that the second track 181 is fastened more firmly and stably.

The second driving mechanism 183 may include a moving seat disposed on the second track 181 and connected to the second track 181 in a sliding manner, and one end of the safety belt 182 is disposed on the moving seat through fastening. The second driving mechanism 183 may drive the moving seat and one end of the safety belt 182 to move along the second track 181 with the seat body 172. For a specific driving manner, refer to the first driving mechanism. This is not limited herein.

As shown in FIG. 6, the safety belt apparatus 180 may further include a retractor 184, a buckle 185, and a lock tongue 186. The retractor 184 is disposed on a side of the seat body 172, and the other end of the safety belt 182 is disposed in the retractor 184. The retractor 184 may coil and release the safety belt 182 by the other end of the safety belt 182. The buckle 185 is provided with a through hole. The through hole passes through the safety belt 182, so that the buckle 185 is installed on the safety belt 182 and is movably connected to the safety belt 182. The lock tongue 186 is disposed on the other side of the seat body 172. The buckle 185 may be inserted into the lock tongue 186 and detachably connected to the lock tongue 186, so that the passenger may be bound to the seat body 172.

In some embodiments, when the seat body 172 moves, to bind the passenger to the seat body 172 for protection, the safety belt 182 needs to keep a contact part between the safety belt 182 and the passenger fastened.

FIG. 8 is a schematic diagram of a location relationship between the first track 171 and the second track 181 according to this embodiment of this application, and shows a possible location relationship between the first track 171 and the second track 181 from a perspective of a top direction of a vehicle 10. As shown in FIG. 8, the second track 181 is disposed in parallel with the first track 171. Specifically, the first split 171a is parallel with the third split 181a, the second split 171b is parallel with the fourth split 181b, and the second track 181 is closer to an outer side of the vehicle 10 than the first track 171. Therefore, when the seat body 172 moves to a position shown in FIG. 4, a moving distance of the seat body 172 is the same as that of the moving seat, and an average speed of the seat body 172 may be set to be the same as that of the moving seat. When the seat body 172 moves to a position shown in FIG. 5, a moving distance of the moving seat is greater than a moving distance of the seat body 172, and an average speed of the moving seat may be set to be greater than a moving speed of the seat body 172.

To sum up, the vehicle 10 monitors an environment around the vehicle 10 by using the sensor 160, and the MDC 110 predicts a probability and a location of a collision accident based on monitoring data of the sensor 160. When the probability of the collision accident exceeds a second threshold, the MDC 110 may send a third control instruction to the ACC system 120, and control, by using the ACC system 120, the vehicle 10 to brake, thereby reducing injury caused by the collision to the passenger.

When the collision probability is greater than or equal to a first threshold, and the first threshold is greater than the second threshold, the MDC 110 sends a first control instruction to the seat control system 130, and controls, by using the seat control system 130, the seat body 172 of the seat 170 to move towards a position away from the collision location, so that the passenger may be away from the collision location, thereby reducing injury caused by the collision to the passenger. The MDC 110 may further send a second control instruction to the safety belt control system 140, and control, by using the safety belt control system 140, the safety belt 182 of the safety belt apparatus 180 to tighten and move synchronously with the seat body 172, so that the safety belt 182 can still provide protection for the passenger when the seat body 172 moves.

After a collision occurs, the collision sensor 165 may detect collision intensity of the collision that occurs on the vehicle 10, and send the collision intensity to the MDC 110. When the collision intensity exceeds a specified intensity threshold, the MDC 110 sends a fourth control instruction to the airbag control system 150, and controls, by using the airbag control system 150, the airbag to be opened, to provide protection for the passenger and reduce injury caused by the collision to the passenger.

The following describes a control method 100 provided in an embodiment of this application with reference to the accompanying drawings.

FIG. 9 is a schematic flowchart of the control method 100 according to this embodiment of this application. The control method 100 may be performed by a vehicle 10, an MDC 110, a vehicle-mounted electronic apparatus, a vehicle-mounted computer, or the like, or may be performed by a chip or a processor of an apparatus such as a vehicle-mounted electronic apparatus or a vehicle-mounted computer. As shown in FIG. 9, a procedure of the control method 100 in this embodiment of this application may include the following steps.

Step S110: Obtain collision information, where the collision information includes a predicted collision probability that a collision occurs on the vehicle 10, or indication information indicating whether a collision occurs on the vehicle 10.

Step S120: When the collision probability is greater than or equal to a first threshold, or the indication information indicates that the collision occurs on the vehicle 10, send a first control instruction, where the first control instruction is used to control a seat body 172 of the vehicle 10 to move along a first split 171a and a second split 171b of a first track 171.

In this way, when it is predicted that the collision probability is greater than or equal to the first threshold, or the indication information indicates that the collision occurs on the vehicle 10, the seat body 172 may be controlled to move along the first split 171a and the second split 171b of the first track 171. Because the first split 171a extends along a front-rear direction of the vehicle 10, and the second split 171b extends along a left-right direction of the vehicle 10, when the collision is about to occur or is occurring on a side part of the vehicle 10, the seat body 172 may be controlled to be away from a collision location, thereby reducing injury caused by a collision accident to a passenger and ensuring life safety of the passenger in the vehicle.

Specifically, when the collision occurs on the side part of the vehicle 10, for example, the seat body 172 may be controlled to move along the first split 171a to the second split 171b, to adjust a position of the seat body 172 in the left-right direction, so that the seat body 172 is away from a position on a side on which the collision occurs.

Alternatively, when each of two ends of the second split 171b is connected to one first split 171a, the seat body 172 is controlled to move, along the first split 171a through the second split 171b, to the first split 171a on the other side. In this way, while the seat body 172 is controlled to be away from the collision location, the seat body 172 may be changed from front-facing before the movement to rear-facing, so that legs of the passenger are rear-facing and are away from the collision location.

Further alternatively, when the collision occurs on a front part of the vehicle 10, the seat body 172 is controlled to move, along the first split 171a through the second split 171b, to the first split 171a on the other side. In this way, while the seat body 172 is controlled to be away from the collision location, the seat body 172 may be changed from front-facing before the movement to rear-facing, so that the seat body may be used to provide protection for the passenger, thereby preventing a foreign object that enters a cockpit of the vehicle 10 due to the front-part collision from causing injury to the passenger.

In some embodiments, that the indication information indicates that the collision occurs on the vehicle 10 specifically means that the indication information indicates that collision intensity of the collision occurring on the vehicle is greater than a first intensity threshold.

In this way, when it is detected that the collision intensity of the collision occurring on the vehicle 10 is greater than the first intensity threshold and that the collision intensity may cause injury to the passenger, the seat body 172 may be controlled to move along the first split 171a and the second split 171b of the first track 171, to control the seat body 172 to be away from the collision location, thereby reducing injury caused by the collision accident to the passenger and ensuring life safety of the passenger in the vehicle.

In some embodiments, the collision information further includes a predicted collision location at which the collision occurs on the vehicle 10. When the collision location is the side part of the vehicle 10, the first control instruction is specifically used to control the seat body 172 on a corresponding side of the collision to move along the first track 171 to an opposite side of the collision. For example, when the collision location is the left side of the vehicle 10, the seat body 172 on the left side (a driver's seat) is controlled to move along the first track 171 to a rear side of the seat body 172 on the right side (a front passenger seat).

In this way, when it is predicted that the collision location is the side part of the vehicle 10, a moving direction of the seat body 172 may be controlled based on the predicted collision location. Therefore, when the collision occurs, the seat body 172 may be controlled to be away from the collision location, to reduce injury caused by the collision accident to the passenger.

In some embodiments, when there are two seat bodies 172, the control method 100 further includes: obtaining passenger seating information of the seat bodies 172. The first control instruction is specifically used to control a seat body 172 taken by a passenger in the seating information to move along the first track 171.

In this way, whether there is a passenger on the seat body 172 may be determined based on the seating information, so that the seat body 172 taken by the passenger may be controlled to move, to reduce injury caused by the collision accident to the passenger, and improve efficiency of passenger protection during the collision.

In some embodiments, when the collision location is the front part of the vehicle 10, and one of the two seat bodies 172 in the seating information is taken by the passenger, the first control instruction is specifically used to control the seat body 172 taken by the passenger to move along the first track 171.

In this way, when the collision accident occurs on the front part of the vehicle 10, the seat body 172 taken by the passenger may be controlled to move to a rear side of the seat body 172 not taken by the passenger, so that the seat body 172 not taken by the passenger may be used to protect the passenger, thereby preventing a foreign object of the front part that collides into the cockpit due to the collision from causing injury to the passenger.

In some embodiments, after the vehicle 10 collides with a vehicle ahead, the collision information further includes a predicted location relationship between the vehicle 10 and the vehicle ahead. When the location relationship indicates that the vehicle 10 is located at the bottom of the vehicle ahead, the first control instruction is further used to control the seat body 172 to reduce a height.

In this way, when it is predicted that the vehicle 10 is located at the bottom of the vehicle ahead after the collision, the seat body 172 may be controlled to reduce the height to reduce a height of the passenger, thereby preventing a rear end of the vehicle ahead from colliding into the cockpit of the vehicle 10 and causing injury to the passenger.

In some embodiments, when the collision probability is greater than or equal to the first threshold, or the indication information indicates that the collision occurs on the vehicle, the control method 100 further includes: sending a second control instruction, where the second control instruction is used to control one end of a safety belt 182 to move along a third split 181a and a fourth split 181b of a second track 181, the third split 181a extends along the front-rear direction of the vehicle 10, and the fourth split 181b extends along the left-right direction of the vehicle 10 and is connected to a rear end of the third split 181a.

In this way, when the seat body 172 moves on the first track 171, one end of the safety belt 182 is controlled to move along the second track 181, so that the safety belt 182 may bind the passenger to the seat body 172 during movement of the seat body 172, thereby preventing the passenger from falling from the seat body 172 due to inertia when the seat body 172 moves.

In some embodiments, the second control instruction is further used to control the safety belt 182 to be tightened.

In this way, the safety belt 182 may be tightened to bind the passenger to the seat body 172, thereby preventing the passenger from falling from the seat and avoiding a danger.

In some embodiments, the control method 100 further includes: when the collision probability is greater than a second threshold, sending a third control instruction, where the third control instruction is used to control the vehicle 10 to brake.

In this way, a speed of the vehicle 10 may be reduced by controlling the vehicle 10 to brake, thereby avoiding the collision accident or reducing a severity of the collision accident, to reduce injury caused by the collision accident to the passenger.

The following describes in detail a controller in an embodiment of this application with reference to the accompanying drawings.

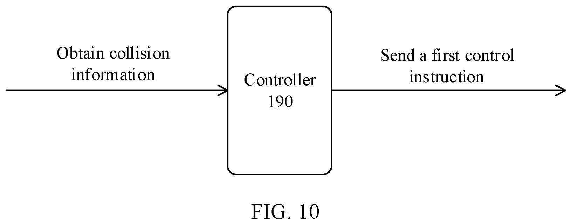

FIG. 10 is a schematic diagram of the controller 190 according to this embodiment of this application. As shown in FIG. 10, the controller 190 in this embodiment of this application includes: The controller 190 obtains collision information, where the collision information includes a predicted collision probability that a collision occurs on a vehicle 10, or indication information indicating whether a collision occurs on a vehicle 10. When the collision probability is greater than or equal to a first threshold, or the indication information indicates that the collision occurs on the vehicle 10, the controller 190 sends a first control instruction, where the first control instruction is used to control a seat body 172 of the vehicle 10 to move along a first split 171a and a second split 171b of a first track 171.

In this way, when it is predicted that the collision probability is greater than or equal to the first threshold, or the indication information indicates that the collision occurs on the vehicle, the seat body 172 may be controlled to move along the first split 171a and the second split 171b of the first track 171. Therefore, when the collision is about to occur or is occurring on a side part of the vehicle 10, the seat body 172 may be controlled to be away from a collision location, thereby reducing injury caused by a collision accident to a passenger and ensuring life safety of the passenger in the vehicle.

A function of the controller 190 may be implemented by a processor by executing a program (software). In addition, the function may be implemented by using hardware such as a large scale integrated circuit (Large Scale Integrated Circuit, LSI) and an application-specific integrated circuit (Application-Specific Integrated Circuit, ASIC), or may be implemented by using a combination of software and hardware.

By using the controller 190 in this embodiment, a technical effect that is the same as that in the embodiment described with reference to FIG. 8 may be obtained. Details are not described herein again.

With reference to a specific scenario, the following describes a passenger protection method further provided in an embodiment of this application.

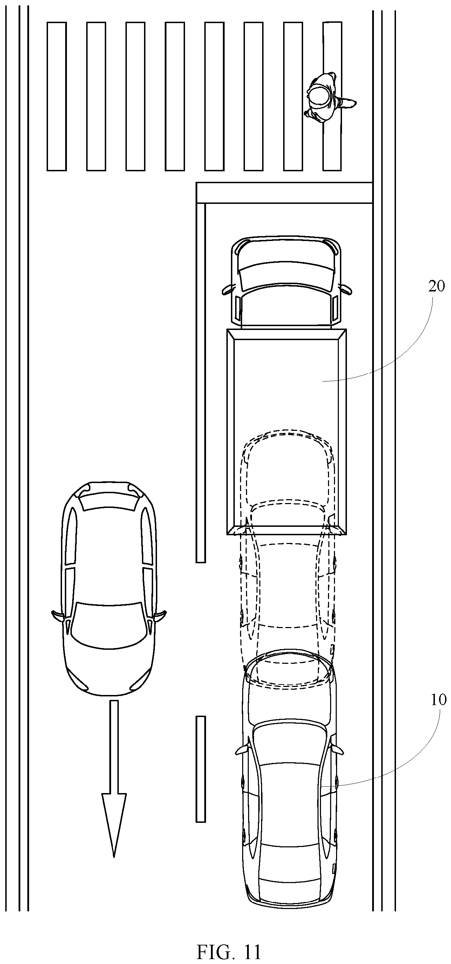

FIG. 11 is a diagram of a scenario in which a collision occurs on a front part of a vehicle 10 according to this embodiment of this application, and provides a possible scenario in which the collision occurs on the front part of the vehicle 10. As shown in FIG. 11, the vehicle 10 drives on a road following another vehicle 20. When the another vehicle 20 brakes in an emergency due to yielding to a pedestrian, a collision accident may occur between a front part of the vehicle 10 and the another vehicle 20 ahead due to an excessively close distance between the vehicle 10 and the another vehicle 20.

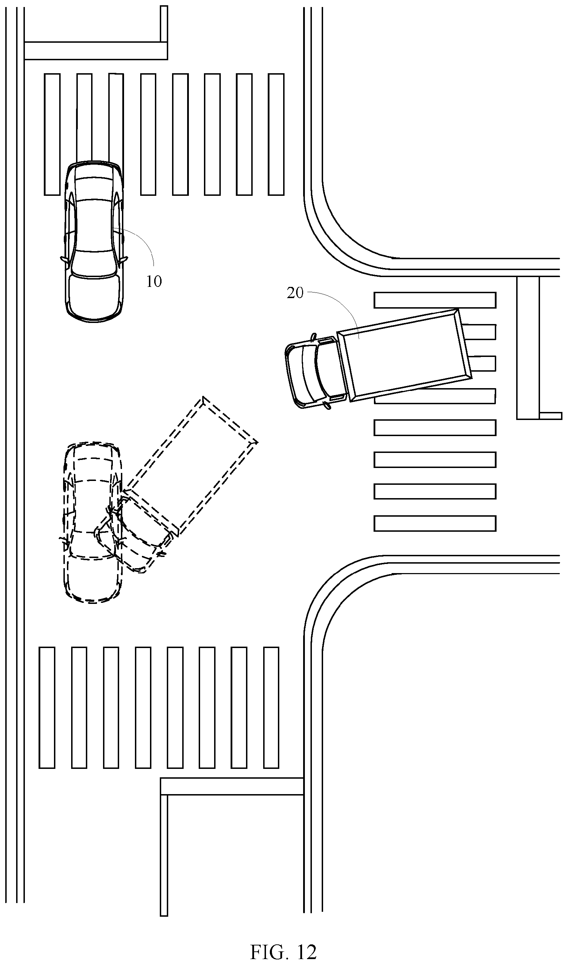

FIG. 12 is a diagram of a scenario in which the collision occurs on a side part of the vehicle 10 according to this embodiment of this application, and provides a possible scenario in which the collision occurs on the side part of the vehicle 10 in a driving process. As shown in FIG. 12, the vehicle 10 drives straight on the road. When the vehicle 10 passes through an intersection without a traffic light, the another vehicle 20 drives into the intersection from a left entrance of the intersection, and turns left to drive in the same direction as the vehicle 10. If neither the vehicle 10 nor the another vehicle 20 avoids each other by braking or making a turn, the another vehicle 20 may collide with a position at the side part of the vehicle 10, thereby causing a collision accident.

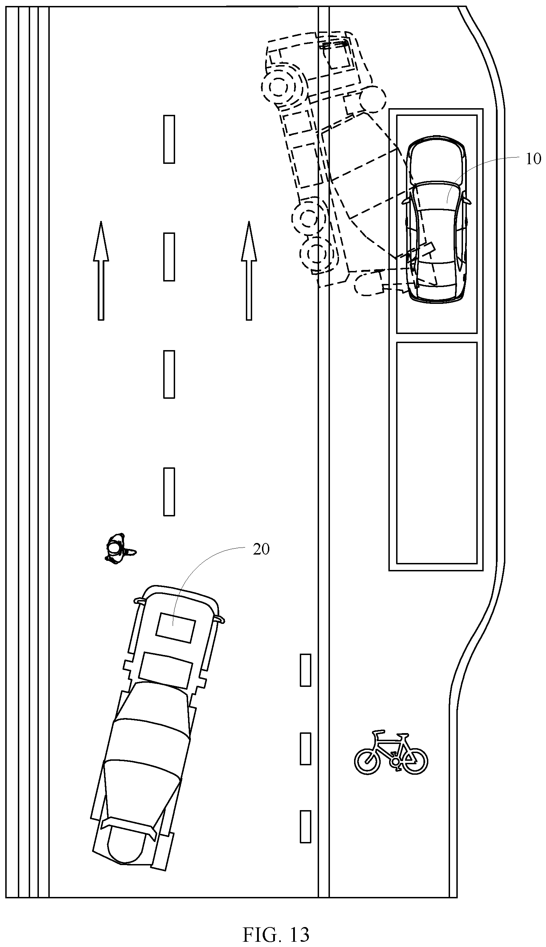

FIG. 13 is a diagram of another scenario in which a collision occurs on a side part of the vehicle 10 according to this embodiment of this application, and provides a possible scenario in which the collision occurs on the side part of the vehicle 10 when the vehicle 10 is parked in a roadside parking space. As shown in FIG. 13, the vehicle 10 is parked in the roadside parking space. When passing through this road section, the another vehicle 20 encounters a pedestrian that suddenly appears ahead and is crossing the road. To avoid the pedestrian, the another vehicle 20 urgently makes a turn to change a lane. However, the another vehicle 20 is overturned when making the turn due to an excessive load, and may collide with or overturn on a position at the side part of the vehicle 10, thereby causing a collision accident.

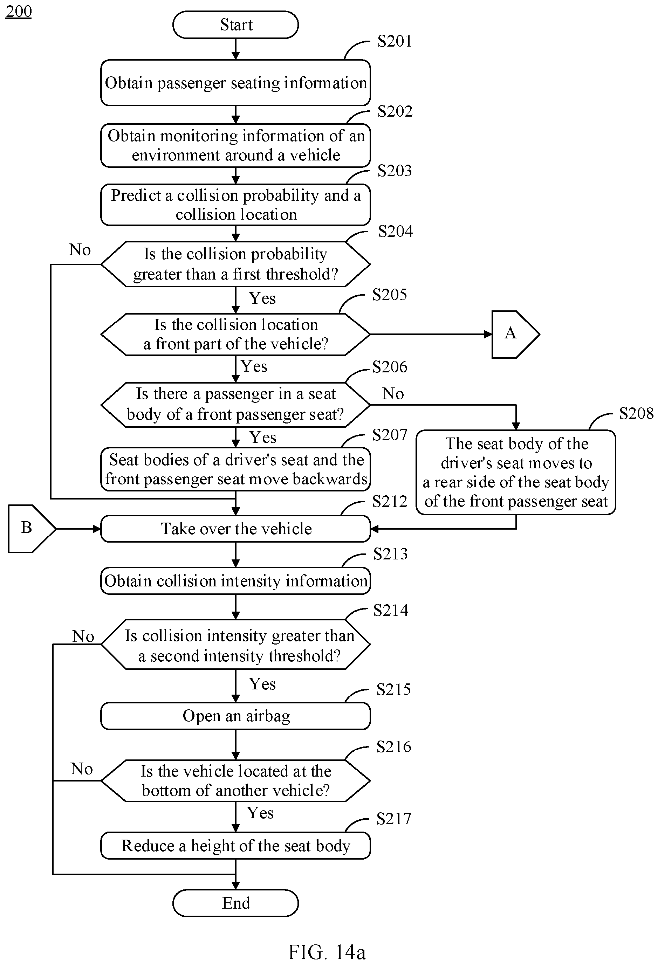

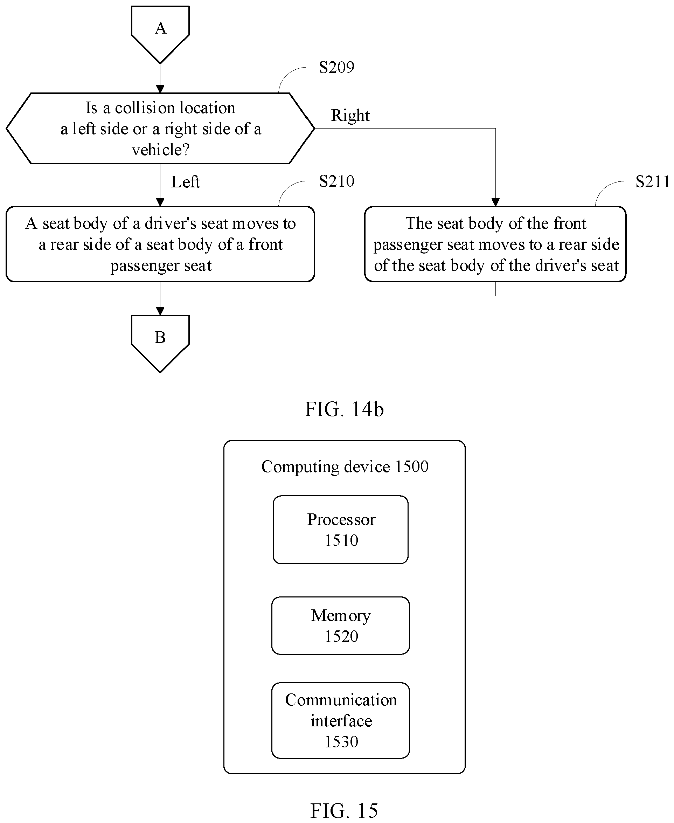

FIG. 14a is a partial flowchart of the passenger protection method performed by the vehicle 10 according to this embodiment of this application, and FIG. 14b is another partial flowchart of the passenger protection method performed by the vehicle 10 according to this embodiment of this application. As shown in FIG. 14a and FIG. 14b, to protect a passenger in the vehicle 10 and reduce injury caused by the collision accident to the passenger, a specific procedure of the passenger protection method in this embodiment of this application includes the following steps.

Step S201: Obtain passenger seating information.

When the passenger takes a seat, a pressure sensor 164 located on the seat 170 may detect, based on a pressure change of the seat 170, whether the passenger takes the seat. In addition, the pressure sensor 164 may further send the passenger seating information to an MDC 110.

Step S202: Obtain monitoring information of an environment around the vehicle 10.

The vehicle 10 may detect the environment around the vehicle 10 by using sensors 160 such as a lidar 161, a millimeter wave radar 162, and a camera 163 disposed at different locations of the vehicle 10, and send data detected to the MDC 110.

Step S203: Predict a collision probability and a collision location.

The MDC 110 may process the data detected by the sensors 160, to determine a distance Li between the vehicle 10 and the another vehicle 20, and a relative speed V between the vehicle 10 and the another vehicle 20. The MDC 110 may further determine a braking distance S of the vehicle 10 at a speed of 100 km/h based on a friction force of a road surface and braking performance of the vehicle 10. In this way, the MDC 110 may derive the following:

$$L_2 = \frac{S \times 100}{V}$$

a safe braking distance ; and

$$H = \left(1 - \frac{L_1}{L_2}\right) \times 100\%$$

a probability that the vehicle 10 collides with the another vehicle 20.

In addition, the MDC 110 may further determine, based on driving directions and locations of the vehicle 10 and the another vehicle 20, a collision location when the vehicle 10 collides with the another vehicle 20. The collision location may be the front part or a left side part or a right side part of the vehicle 10.

The MDC 110 may further determine, based on a shape of the another vehicle 20 and other data, a location relationship between the vehicle 10 and the another vehicle 20 after the vehicle 10 collides with the another vehicle 20. For example, when the vehicle 10 rear-ends the another vehicle 20 ahead, and the another vehicle 20 is of a vehicle model with a relatively high chassis such as a cement tanker or a truck, the vehicle 10 may be located underneath the another vehicle 20 after the collision. Further alternatively, when the another vehicle 20 is a bicycle, the vehicle 10 may be located above the another vehicle 20.

Step S204: Determine whether the collision probability is greater than or equal to a first threshold.

When the probability H that the vehicle 10 collides with the another vehicle 20 is greater than or equal to the first threshold, for example, greater than or equal to 60%, the MDC 110 may determine that the collision accident may cause injury to the passenger, so that a seat body 172 needs to be controlled to move, to reduce injury caused by the collision accident to the passenger.

When the probability H that the vehicle 10 collides with the another vehicle 20 is greater than a second threshold, for example, greater than 5% or 10%, and less than the first threshold, the MDC 110 may determine that the collision accident may not cause injury to the passenger, so that the seat body 172 does not need to be moved.

Step S205: Determine whether the collision location is the front part of the vehicle 10.

When the collision location is the front part of the vehicle 10, the seat body 172 needs to be controlled to move backwards, to reduce injury caused by the collision accident to the passenger.

When the collision location is the left/right side, the seat body 172 needs to be controlled to move towards the opposite side, to reduce injury caused by the collision accident to the passenger.

Step S206: Determine whether there is a passenger on a seat body 172 at a position of a front passenger seat.

When the seat bodies 172 at both positions of a driver's seat and the front passenger seat are taken by passengers in the passenger seating information, the seat bodies 172 at both the positions of the driver's seat and the front passenger seat need to be controlled to move at the same time, to reduce injury caused by the collision accident to the passengers at the positions of the driver's seat and the front passenger seat.

When only the seat body 172 at the position of the driver's seat is taken by a passenger in the passenger seating information, only the seat body 172 at the position of the driver's seat needs to be controlled to move, to reduce injury caused by the collision accident to the passenger at the position of the driver's seat.

Step S207: Control the seat bodies 172 of the driver's seat and the front passenger seat to move backwards.

When the seat bodies 172 at both the positions of the driver's seat and the front passenger seat are taken by passengers in the passenger seating information, the MDC 110 may control, by using a seat control system 130, the seat bodies 172 at the positions of the driver's seat and the front passenger seat to move backwards along a first split 171a of a first track 171 at the same time, so that the passengers at the positions of the driver's seat and the front passenger seat can be away from the collision location, thereby reducing injury caused by the collision accident on the front part of the vehicle 10 to the passengers at the positions of the driver's seat and the front passenger seat.

Step S208: Control the seat body 172 of the driver's seat to move to a rear side of the seat body 172 of the front passenger seat.

When only the seat body 172 at the position of the driver's seat is taken by a passenger in the passenger seating information, the MDC 110 may control, by using the seat control system 130, the seat body 172 at the position of the driver's seat to move along the first track 171 to the rear side of the seat body 172 at the position of the front passenger seat. In this way, the passenger at the position of the driver's seat can be away from the collision location, and the seat body 172 at the position of the front passenger seat may be used to provide protection for the passenger, thereby reducing injury caused by the collision accident on the front side of the vehicle 10 to the passenger at the position of the driver's seat. In addition, after the seat body 172 at the position of the driver's seat moves along the first track 171 to the rear side of the seat body 172 at the position of the front passenger seat, the seat body 172 at the position of the driver's seat changes from facing the front of the vehicle 10 before movement to facing the rear of the vehicle 10 after the movement to the rear side of the seat body 172 at the position of the front passenger seat. In this way, when a collision occurs on the front side of the vehicle 10, the seat bodies 172 of the driver's seat and the front passenger seat may be used to provide protection for the passenger, thereby reducing injury caused by the collision accident to the passenger at the position of the driver's seat.

Step S209: Determine whether the collision location is the left side or the right side of the vehicle 10.

When the collision location is the left side, the seat body 172 at the position of the driver's seat is controlled to move towards the right side of the vehicle 10, to reduce injury caused by the collision accident to the passenger. When the collision location is the right side of the vehicle 10, the seat body 172 at the position of the front passenger seat is controlled to move towards the right side of the vehicle 10, to reduce injury caused by the collision accident to the passenger.

Step S210: The seat body 172 of the driver's seat moves to the rear side of the seat body 172 of the front passenger seat.

When the collision location is the left side, the seat body 172 at the position of the driver's seat is controlled to move to the rear side of the seat body 172 of the front passenger seat, so that the passenger is kept away from the collision location, and legs of the passenger on the seat body 172 may be rear-facing, to reduce injury caused by the collision accident to the passenger.

Step S211: The seat body 172 of the front passenger seat moves to a rear side of the seat body 172 of the driver's seat.

When the collision location is the left side, the seat body 172 at the position of the driver's seat is controlled to move to the rear side of the seat body 172 of the front passenger seat, so that the passenger is kept away from the collision location, and legs of the passenger on the seat body 172 may be rear-facing, to reduce injury caused by the collision accident to the passenger.

Step S212: Take over the vehicle 10.

When it is predicted that the collision probability that the collision occurs between the vehicle 10 and another vehicle 20 is greater than the second threshold (the second threshold may be set to be less than the first threshold), the MDC 110 may further take over the vehicle 10, lock a steering wheel, and control, by using an ACC system 120, the vehicle 10 to brake, to reduce injury caused by the collision to the passenger.

The MDC 110 may also turn on a double flash to remind a rear vehicle to keep a distance, and may honk and flash a high beam to prompt a vehicle ahead to accelerate or pay attention to the rear vehicle.

Step S213: Obtain collision intensity information.

After the vehicle 10 collides with the another vehicle 20, a collision sensor 165 may send the collision intensity information to the MDC 110, and the MDC 110 may determine, based on the collision intensity information, whether to open an airbag.

Step S214: Determine whether collision intensity is greater than a second intensity threshold.

When the collision intensity is greater than the second intensity threshold, the collision intensity is relatively high. The collision accident may cause injury to the passenger, and the airbag needs to be opened.

When the collision intensity is less than or equal to the second intensity threshold, the collision intensity is relatively small. The collision accident may not cause injury to the passenger, and the airbag does not need to be opened.

Step S215: Open the airbag.

When the collision intensity is greater than a third threshold, the MDC 110 may control, by using an airbag control system 150, the airbag to be opened, to provide protection for the passenger, and reduce injury caused by the collision accident to the passenger.

Step S216: Determine whether the vehicle 10 is located at the bottom of the another vehicle 20.

The vehicle 10 is located at the bottom of the another vehicle 20 in the location relationship. For example, when the another vehicle 20 is a truck or a concrete tank truck, because a chassis of a front side of the another vehicle 20 is relatively high, the vehicle 10 may collide into the bottom of the another vehicle 20 after colliding with a rear end of the another vehicle 20. Therefore, the rear end of the another vehicle 20 may collide into the cockpit at a higher position. This may cause injury to the passenger in the cockpit.

Step S217: Reduce a height of the seat body 172.

When it is predicted that the vehicle 10 is located at the bottom of the another vehicle 20 after the collision, the MDC 110 may control, by using the seat control system 130, the seat body 172 to reduce the height, to reduce injury caused to the passenger after the rear end of the another vehicle 20 collides into the cockpit of the vehicle 10.

In some embodiments, when the predicted collision probability is less than or equal to the first threshold due to impact of an environment, a device fault, or the like, the MDC 110 does not control the seat body 172 to move. However, at the same time, the collision sensor 165 detects that a collision accident occurs on the vehicle 10. When the collision intensity is greater than the first intensity threshold, the MDC 110 controls the seat body 172 to move to a position away from the collision location, to reduce injury caused by the collision accident to the passenger.

FIG. 15 is a schematic diagram of a structure of a computing device 1500 according to an embodiment of this application. The computing device 1500 includes a processor 1510, a memory 1520, and a communication interface 1530.

It should be understood that the communication interface 1530 in the computing device 1500 shown in FIG. 15 may be configured to communicate with another device.

The processor 1510 may be connected to the memory 1520. The memory 1520 may be configured to store program code and data. Therefore, the memory 1520 may be a storage unit in the processor 1510, an external storage unit independent of the processor 1510, or a component including the storage unit in the processor 1510 and the external storage unit independent of the processor 1510.

It should be understood that in this embodiment of this application, the processor 1510 may be a central processing unit (central processing unit, CPU). The processor may be alternatively a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor may be a microprocessor, or the processor may be any conventional processor or the like. Alternatively, the processor 1510 uses one or more integrated circuits to execute a related program, to implement the technical solutions provided in embodiments of this application.

The memory 1520 may include a read-only memory and a random access memory, and provide instructions and data for the processor 1510. A part of the processor 1510 may further include a nonvolatile random access memory. For example, the processor 1510 may further store information of a device type.

When the computing device 1500 runs, the processor 1510 executes computerexecutable instructions in the memory 1520 to perform operation steps of the foregoing method.

It should be understood that the computing device 1500 according to this embodiment of this application may correspond to a corresponding execution body of the method according to embodiments of this application. In addition, the foregoing and other operations and/or functions of modules in the computing device 1500 are separately intended to implement corresponding procedures of methods in embodiment. For brevity, details are not described herein again.

A person of ordinary skill in the art may be aware that, in combination with examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. All or a part of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (Read-Only Memory, ROM), a random access memory (Random Access Memory, RAM), a magnetic disk, or a compact disc.

An embodiment of this application further provides a computer-readable storage medium, storing a computer program. When being executed by a processor, the program is used to perform a diversified problem generation method. The method includes at least one of the solutions described in the foregoing embodiments.

The computer storage medium according to this embodiment of this application may be any combination of one or more computer-readable media. The computer-readable medium may be a computer-readable signal medium or a computer-readable storage medium. For example, the computer-readable storage medium may be, but is not limited to, an electric, magnetic, optical, electromagnetic, infrared, or semiconductor system, apparatus, or device, or any combination thereof. More specific examples (a non-exhaustive list) of the computer-readable storage medium include an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any proper combination thereof. In this specification, the computer-readable storage medium may be any tangible medium that includes or stores a program, and the program may be used by or in combination with an instruction execution system, apparatus, or device.

The computer-readable signal medium may include a data signal that is propagated in a baseband or as a part of a carrier, where the data signal carries computer-readable program code. The propagated data signal may be in a plurality of forms, including but not limited to an electromagnetic signal, an optical signal, or any appropriate combination thereof. The computer-readable signal medium may alternatively be any computer-readable medium other than the computer-readable storage medium. The computer-readable medium may send, propagate, or transmit a program used by or in combination with an instruction execution system, apparatus, or device.

Program code included in the computer-readable medium may be transmitted by using any proper medium, including but not limited to Wi-Fi, a wire, an optical cable, RF, and the like, or any proper combination thereof.

Computer program code for performing the operations in this application may be written in one or more programming languages, or a combination thereof. The programming languages include an object-oriented programming language, such as Java, Smalltalk, and C++, and also include a conventional procedural programming language, such as a "C" language or a similar programming language. The program code may be executed entirely on a user computer, or some may be executed on a user computer as a separate software package, or some may be executed on a user computer while some is executed on a remote computer, or the code may be entirely executed on a remote computer or a server. When a remote computer is involved, the remote computer may be connected to a user computer through any type of network, including a local area network (LAN) or a wide area network (WAN), or may be connected to an external computer (for example, connected by using an Internet service provider through the Internet).

It should be noted that the foregoing is merely example embodiments and technical principles of this application. A person skilled in the art may understand that this application is not limited to specific embodiments described herein, and a person skilled in the art may make various obvious changes, readjustments, and replacements without departing from the protection scope of this application. Therefore, although this application is described in detail with reference to the foregoing embodiments, this application is not limited to the foregoing embodiments. More other equivalent embodiments may be included without departing from the concept of this application, and all fall within the protection scope of this application.

**Claims**

1. A vehicle seat, comprising:

   a first track, wherein the first track is disposed at the bottom of a cockpit of a vehicle and has a first split and a second split, the first split extends along a front-rear direction of the vehicle, and the second split extends along a left-right direction of the vehicle and is connected to a rear end of the first split;
   a seat body, wherein the seat body is disposed on the first track; and
   a first driving mechanism, wherein the first driving mechanism is configured to drive the seat body to move along the first track.

2. The vehicle seat according to claim 1, wherein a left end and a right end of the second split are separately connected to the first split.

3. The vehicle seat according to claim 1 or 2, wherein there are two seat bodies.

4. A safety belt apparatus, comprising:

   a safety belt;
   a second track, wherein the second track is disposed at the top of a cockpit of a vehicle and has a third split and a fourth split, the third split extends along a front-rear direction of the vehicle, and the fourth split extends along a left-right direction of the vehicle and is connected to a rear end of the third split; and
   a second driving mechanism, wherein the second driving mechanism is configured to drive one end of the safety belt to move along the second track.

5. The safety belt apparatus according to claim 4, wherein a left end and a right end of the fourth split are separately connected to the third split.

6. The safety belt apparatus according to claim 4 or 5, further comprising:
   a retractor, wherein the retractor is disposed on a seat body through fastening, and the other end of the safety belt is connected to the retractor.

7. A control method, comprising:

   obtaining collision information, wherein the collision information comprises a predicted collision probability that a collision occurs on a vehicle, or indication information indicating whether a collision occurs on a vehicle; and
when the collision probability is greater than or equal to a first threshold, or the indication information indicates that the collision occurs on the vehicle, sending a first control instruction, wherein the first control instruction is used to control a seat body of the vehicle to move along a first split and a second split of a first track, the first split extends along a front-rear direction of the vehicle, and the second split extends along a left-right direction of the vehicle and is connected to a rear end of the first split.

8. The control method according to claim 7, wherein

   the collision information further comprises a predicted collision location at which the collision occurs on the vehicle; and
   when the collision location is a side part of the vehicle, the first control instruction is specifically used to control the seat body on a corresponding side of the side part to move along the first track to an opposite side of the side part.

9. The control method according to claim 7 or 8, wherein there are two seat bodies, and the method further comprises:

   obtaining passenger seating information of the seat bodies, wherein
   the first control instruction is specifically used to control a seat body taken by a passenger in the seating information to move along the first track.

10. The control method according to any one of claims 7 to 9, wherein

    the collision information further comprises a location relationship between the vehicle and a vehicle ahead that is predicted after the vehicle collides with the vehicle ahead; and
    when the location relationship indicates that the vehicle is located at a bottom of the vehicle ahead, the first control instruction is further used to control the seat body to reduce a height.

11. The control method according to any one of claims 7 to 10, further comprising:
    when the collision probability is greater than or equal to the first threshold, or the indication information indicates that the collision occurs on the vehicle, sending a second control instruction, wherein the second control instruction is used to control one end of a safety belt to move along a third split and a fourth split of a second track, the third split extends along the front-rear direction of the vehicle, and the fourth split extends along the left-right direction of the vehicle and is connected to a rear end of the third split.

12. A controller, wherein

the controller obtains collision information, wherein the collision information comprises a predicted collision probability that a collision occurs on a vehicle, or indication information indicating whether a collision occurs on a vehicle; and
when the collision probability is greater than or equal to a first threshold, or the indication information indicates that the collision occurs on the vehicle, the controller sends a first control instruction, wherein the first control instruction is used to control a seat body of the vehicle to move along a first split and a second split of a first track, the first split extends along a front-rear direction of the vehicle, and the second split extends along a left-right direction of the vehicle and is connected to a rear end of the first split.

13. The controller according to claim 12, wherein

the collision information further comprises a predicted collision location at which the collision occurs on the vehicle; and
when the collision location is a side part of the vehicle, the first control instruction is specifically used to control the seat body on a corresponding side of the side part to move along the first track to an opposite side of the side part.

14. The controller according to claim 12 or 13, wherein there are two seat bodies, and the controller further performs the following operation:

obtaining passenger seating information of the seat bodies, wherein
the first control instruction is specifically used to control a seat body taken by a passenger in the seating information to move along the first track.

15. The controller according to any one of claims 12 to 14, wherein

the collision information further comprises a location relationship between the vehicle and a vehicle ahead that is predicted after the vehicle collides with the vehicle ahead; and
when the location relationship indicates that the vehicle is located at a bottom of the vehicle ahead, the first control instruction is further used to control the seat body to reduce a height.

16. The controller according to any one of claims 12 to 15, wherein the controller further performs the following operation:

when the collision probability is greater than or equal to the first threshold, or the indication information indicates that the collision occurs on the vehicle, the controller sends a second control instruction, wherein the second control instruction is used to control one end of a safety belt to move along a third split and a fourth split of a second track, the third split extends along the front-rear direction of the vehicle, and the fourth split extends along the left-right direction of the vehicle and is connected to a rear end of the third split.

17. A vehicle, comprising the vehicle seat according to any one of claims 1 to 3.

18. The vehicle according to claim 17, further comprising the safety belt apparatus according to any one of claims 4 to 6.

19. A computing device, comprising a processor and a memory, wherein the memory stores program instructions, and when the program instructions are executed by the processor, the processor is enabled to perform the method according to any one of claims 7 to 11.

20. A computer-readable storage medium, storing program instructions, wherein when the program instructions are executed by a computer, the computer is enabled to perform the method according to any one of claims 7 to 11.

21. A computer program product, comprising program instructions, wherein when the program instructions are executed by a computer, the computer is enabled to perform the method according to any one of claims 7 to 11.

FIG. 1

☐ Lidar　▨ Radar　◯ Camera　⊘ Collision sensor　△ Pressure sensor

FIG. 2

10

170

171a

171

171b

173     172

171a

FIG. 3

10

170

171a     171

172

171b

172

171a

FIG. 4

10

172          170

171b

171

171a

FIG. 5

172

180

182

185

186          184

FIG. 6

FIG. 7

FIG. 8

100

Obtain collision information

S101

Send a first control instruction

S102

FIG. 9

Obtain collision
information

→

Controller
190

Send a first control
instruction

→

FIG. 10

FIG. 11

FIG. 12

FIG. 13

200

```
                    ┌──────────────┐
                    │    Start     │
                    └──────┬───────┘
                           │            ╭─ S201
                    ┌──────▼───────────────────────┐
                    │ Obtain passenger seating information │
                    └──────┬───────────────────────┘
                           │            ╭─ S202
                    ┌──────▼───────────────────────┐
                    │ Obtain monitoring information of an │
                    │    environment around a vehicle     │
                    └──────┬───────────────────────┘
                           │            ╭─ S203
                    ┌──────▼───────────────────────┐
                    │ Predict a collision probability and a │
                    │        collision location            │
                    └──────┬───────────────────────┘
                           │            ╭─ S204
         No    ◁───────────◇────────────────────────▷
                    │ Is the collision probability         │
                    │  greater than a first threshold?     │
                           │ Yes        ╭─ S205
                    ◇────────────────────────────▷────────▶ ⟨ A ⟩
                    │ Is the collision location            │
                    │ a front part of the vehicle?         │
                           │ Yes        ╭─ S206         No
                    ◇────────────────────────────▷──────────────┐
                    │ Is there a passenger in a seat        │      │
                    │ body of a front passenger seat?       │      │
                           │ Yes        ╭─ S207              ╭─ S208
                    ┌──────▼───────────────────┐    ┌──────▼──────────────┐
                    │ Seat bodies of a driver's seat and the │ │ The seat body of the │
                    │ front passenger seat move backwards    │ │ driver's seat moves to │
                    └──────┬───────────────────┘    │ a rear side of the seat body │
                           │            ╭─ S212      │ of the front passenger seat  │
      ⟨ B ⟩ ────▶ ┌──────▼───────────────────┐◀────└──────────────────┘
                    │       Take over the vehicle   │
                    └──────┬───────────────────┘
                           │            ╭─ S213
                    ┌──────▼───────────────────┐
                    │ Obtain collision intensity information │
                    └──────┬───────────────────┘
                           │            ╭─ S214
         No    ◁───────────◇───────────────────────▷
                    │ Is collision intensity greater than   │
                    │    a second intensity threshold?      │
                           │ Yes        ╭─ S215
                    ┌──────▼───────────────────┐
                    │         Open an airbag        │
                    └──────┬───────────────────┘
                           │            ╭─ S216
         No    ◁───────────◇───────────────────────▷
                    │ Is the vehicle located at the        │
                    │  bottom of another vehicle?          │
                           │ Yes        ╭─ S217
                    ┌──────▼───────────────────┐
                    │  Reduce a height of the seat body │
                    └──────┬───────────────────┘
                           │
                    ┌──────▼───────┐
                    │     End      │
                    └──────────────┘
```

FIG. 14a

A

S209

Is a collision location
a left side or a right side of a
vehicle?

Right

Left

S210

A seat body of a driver's seat moves to
a rear side of a seat body of a front
passenger seat

S211

The seat body of the front
passenger seat moves to a rear side
of the seat body of the driver's seat

B

FIG. 14b

Computing device 1500

Processor
1510

Memory
1520

Communication
interface
1530

FIG. 15

## INTERNATIONAL SEARCH REPORT

| International application No. |
| --- |
| **PCT/CN2021/129600** |

| A. | CLASSIFICATION OF SUBJECT MATTER |
| --- | --- |
| | B60N 2/14(2006.01)i;  B60R 22/24(2006.01)i;  B60R 21/00(2006.01)i |

According to International Patent Classification (IPC) or to both national classification and IPC

| B. | FIELDS SEARCHED |
| --- | --- |

Minimum documentation searched (classification system followed by classification symbols)
B60N B60R

Documentation searched other than minimum documentation to the extent that such documents are included in the fields searched

Electronic data base consulted during the international search (name of data base and, where practicable, search terms used)
CNABS; CNTXT; CNKI; VEN; WOTXT; EPTXT; USTXT: 华为, 陈庆学, 座椅, 导轨, 滑道, 滑槽, 滑轨, 轨道, U型, 碰撞, 安全带, 左右, seat, track, rail+, trace, slid+, belt, collide, left, right

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 106394449 A (TOYOTA MOTOR CORPORATION) 15 February 2017 (2017-02-15) description, paragraphs [0032]-[0080], and figures 1-8B | 1-3, 17 |
| Y | CN 106394449 A (TOYOTA MOTOR CORPORATION) 15 February 2017 (2017-02-15) description, paragraphs [0032]-[0080], and figures 1-8B | 7-16, 18-21 |
| X | CN 111186411 A (FORD GLOBAL TECHNOLOGIES, L.L.C.) 22 May 2020 (2020-05-22) description, paragraphs [0024]-[0074], and figures 1-10 | 4-6 |
| Y | CN 111186411 A (FORD GLOBAL TECHNOLOGIES, L.L.C.) 22 May 2020 (2020-05-22) description, paragraphs [0024]-[0074], and figures 1-10 | 11, 16, 18-21 |
| X | CN 105555600 A (SABIC INNOVATIVE PLASTICS IP B.V.) 04 May 2016 (2016-05-04) description, paragraphs [0018]-[0059], and figures 1-7 | 1-3, 17 |
| Y | JP 2015058769 A (JIROU COLLECTION KK) 30 March 2015 (2015-03-30) description, paragraphs [0016]-[0035], and figures 1-4 | 7-16, 19-21 |
| A | JP 2003118438 A (NISSAN MOTOR CO., LTD.) 23 April 2003 (2003-04-23) entire document | 1-21 |
| A | US 3554577 A (JOHN R HANE) 12 January 1971 (1971-01-12) entire document | 1-21 |

☐ Further documents are listed in the continuation of Box C.   ☑ See patent family annex.

| * | Special categories of cited documents: | |
| --- | --- | --- |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **22 June 2022** | **01 July 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/129600** |

| Box No. III     Observations where unity of invention is lacking (Continuation of item 3 of first sheet) |
| --- |

This International Searching Authority found multiple inventions in this international application, as follows:

[1]   Independent claim 1 relates to a vehicle seat.

[2]   Independent claim 4 relates to a seat belt device.

[3]   Independent claim 7 relates to a control method.

[4]   Independent claim 12 relates to a controller.

[5]   Independent claim 17 relates to a vehicle, and refers to any one of claims 1-3.

[6]   Independent claim 19 relates to a computing device, and refers to any one of claims 7-11.

[7]   Independent claim 20 relates to a computer-readable storage medium, and refers to any one of claims 7-11.

[8]   Independent claim 21 relates to a computer program product, and refers to any one of claims 7-11.

[9]   Independent claim 4 and other independent claims do not share a same or corresponding technical feature, that is, said independent claims do not share a special technical feature defining the contribution that the invention makes over the prior art, are not technically linked, do not belong to a single general inventive concept, and therefore do not comply with the requirement of unity of invention, and do not comply with PCT Rule 13.1.

1. ☐   As all required additional search fees were timely paid by the applicant, this international search report covers all searchable claims.

2. ☑   As all searchable claims could be searched without effort justifying additional fees, this Authority did not invite payment of additional fees.

3. ☐   As only some of the required additional search fees were timely paid by the applicant, this international search report covers only those claims for which fees were paid, specifically claims Nos.:

4. ☐   No required additional search fees were timely paid by the applicant. Consequently, this international search report is restricted to the invention first mentioned in the claims; it is covered by claims Nos.:

**Remark on Protest**   ☐   The additional search fees were accompanied by the applicant's protest and, where applicable, the payment of a protest fee.

☐   The additional search fees were accompanied by the applicant's protest but the applicable protest fee was not paid within the time limit specified in the invitation.

☐   No protest accompanied the payment of additional search fees.

Form PCT/ISA/210 (continuation of first sheet) (January 2015)

INTERNATIONAL SEARCH REPORT
Information on patent family members

International application No.

**PCT/CN2021/129600**

| Patent document cited in search report | | | Publication date (day/month/year) | Patent family member(s) | | | Publication date (day/month/year) |
|---|---|---|---|---|---|---|---|
| CN | 106394449 | A | 15 February 2017 | EP | 3124319 | A1 | 01 February 2017 |
| | | | | US | 2018072188 | A1 | 15 March 2018 |
| | | | | JP | 2017024652 | A | 02 February 2017 |
| | | | | US | 2017028876 | A1 | 02 February 2017 |
| | | | | US | 9862290 | B2 | 09 January 2018 |
| | | | | JP | 6304162 | B2 | 04 April 2018 |
| | | | | EP | 3124319 | B1 | 03 October 2018 |
| | | | | CN | 106394449 | B | 09 November 2018 |
| | | | | US | 10399462 | B2 | 03 September 2019 |
| CN | 111186411 | A | 22 May 2020 | DE | 102019130660 | A1 | 14 May 2020 |
| | | | | US | 2020148161 | A1 | 14 May 2020 |
| | | | | US | 10933839 | B2 | 02 March 2021 |
| CN | 105555600 | A | 04 May 2016 | US | 2016221472 | A1 | 04 August 2016 |
| | | | | WO | 2015036973 | A1 | 19 March 2015 |
| | | | | EP | 3044036 | A1 | 20 July 2016 |
| | | | | EP | 3044036 | B1 | 31 May 2017 |
| | | | | US | 2018009348 | A1 | 11 January 2018 |
| | | | | CN | 105555600 | B | 20 November 2018 |
| JP | 2015058769 | A | 30 March 2015 | WO | 2015041269 | A1 | 26 March 2015 |
| JP | 2003118438 | A | 23 April 2003 | JP | 3719188 | B2 | 24 November 2005 |
| US | 3554577 | A | 12 January 1971 | None | | | |

Form PCT/ISA/210 (patent family annex) (January 2015)